# EUROPÄISCHE PATENTANMELDUNG

(11) **EP 4 249 711 A1**
(43) Veröffentlichungstag der Anmeldung: **27.09.2023**
(21) Anmeldenummer: 23160871.2
(22) Anmeldetag: 09.03.2023
(51) Int. Cl.: E05B 67/00, E05B 71/00, F16G 13/00

(54) **KETTE FÜR EIN KETTENSCHLOSS UND KETTENSCHLOSS**

(30) Priorität: 25.03.2022 DE 102022107138
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Eine Kette für ein Kettenschloss umfasst eine serielle Anordnung aufeinanderfolgender Glieder, die untereinander über eine jeweilige Gelenkverbindung miteinander gekoppelt und um eine zu einer Normalrichtung parallele Gelenkachse der jeweiligen Gelenkverbindung relativ zueinander schwenkbar sind. Die Anordnung ist in eine kompakte Aufbewahrungskonfiguration zusammenlegbar, in welcher an jeder der Gelenkverbindungen die beiden über die jeweilige Gelenkverbindung miteinander gekoppelten Glieder relativ zueinander eine Minimalschwenkstellung einnehmen, in der sie einen im Rahmen ihrer relativen Schwenkbarkeit kleinstmöglichen Winkel einschließen. An zumindest einigen der Gelenkverbindungen ist eine Vorgabevorrichtung, insbesondere in Form einer Schwenkwinkelbegrenzung und/oder einer Vorspannvorrichtung, vorgesehen, welche den beiden über die jeweilige Gelenkverbindung miteinander gekoppelten Gliedern eine Schwenkrichtung vorgibt, in welche sie beim Zusammenlegen der Anordnung relativ zueinander verschwenkt werden.

## Beschreibung

Die Erfindung betrifft eine Kette für ein Kettenschloss, das insbesondere als Kettenschloss für ein Zweirad ausgebildet sein kann, sowie ein Kettenschloss, das einen Schlosskörper sowie als Riegelelement eine Kette umfasst.

Zur Sicherung von Zweirädern oder anderen beweglichen Objekten gegen Diebstahl ist es bekannt, das jeweilige Objekt mittels eines Schlosses an einem unbeweglichen Objekt anzuschließen. Das Schloss weist dabei in der Regel ein länglichen Riegelelement auf, das idealerweise durch eine Öffnung des zu sichernden Objekts sowie durch eine Öffnung des unbeweglichen Objekts oder um das unbewegliche Objekt herum geführt und anschließend so an dem Schlosskörper des Schlosses aufgenommen und verriegelt wird, dass sich eine ringförmig geschlossene Struktur ergibt, die sich anschließend nur mittels eines zugehörigen Schließgeheimnisses, z.B. eines Schlüssels oder eines Codes, regulär wieder entriegeln und öffnen lässt.

Bei diesem Riegelelement kann es sich beispielsweise um einen typischerweise U-förmigen Schließbügel eines Bügelschlosses handeln. Ein solcher Schließbügel ist starr ausgebildet. Aus diesem Grund kann er nur eine sehr beschränkte Länge aufweisen, um für ein einfaches Mitführen nicht zu sperrig zu sein. Das hat zur Folge, dass das zu sichernde bewegliche Objekt sehr nah an dem unbeweglichen Objekt, an dem es gesichert werden soll, positioniert werden muss, um mittels eines Bügelschlosses an diesem gesichert werden zu können.

Eine flexiblere Positionierung des zu sichernden Objekts kann durch ein Schloss mit einem längeren Riegelelement erreicht werden, das dann jedoch vorzugsweise nicht starr oder zumindest nicht durchgehend starr ausgebildet ist, sondern sich zusammenlegen lässt, um in kompakter Form transportiert werden zu können. Ein solches Riegelelement kann beispielsweise durch ein Seil, ein Kabel oder eine Kette gebildet werden.

Dabei ist neben einer flexiblen Anwendbarkeit natürlich auch wichtig, dass das Riegelelement möglichst sicher gegen ein Auftrennen oder Aufbrechen ausgebildet ist. Zwar können Kabelschlösser, insbesondere Spiralkabelschlösser, besonders lange Riegelelemente aufweisen, die z.B. aus Drahtseilen gebildet sein können, die aber oftmals kein besonders hohes Sicherheitslevel bieten. Im Vergleich dazu kann die Verwendung einer Gliederkette aus ineinandergreifenden runden oder ovalen Kettengliedern als Riegelelement eine höhere Sicherheit bieten, da die Gliederkette als Ganzes zwar flexibel ist, die einzelnen Kettenglieder aber starr und somit aus besonders hartem Material, z.B. aus gehärtetem Stahl, ausgebildet sein können. Nachteilig an einer Gliederkette als Riegelelement kann aber das vergleichsweise hohe Gewicht sein.

Bei der Sicherung schwerer Motorräder mag das Gewicht eine eher untergeordnete Rolle spielen. Vor allem aber bei Fahrrädern, insbesondere z.B. hochwertigen leichtgebauten Rennrädern, ist neben einer hohen Aufbruchsicherheit auch ein geringes Gewicht wichtig. Insbesondere in diesem Zusammenhang sind Gelenkstabschlösser besonders vorteilhaft, deren Riegelelement durch starre flach-längliche Glieder gebildet wird, die gelenkig miteinander gekoppelt sind und derart parallelversetzt zueinander angeordnet sind, dass sie nach Art eines Zollstocks zu einem kompakten Paket zusammengelegt werden können. Diese starren Gelenkstäbe ebenso wie die Gelenkverbindungen zwischen den Gelenkstäben können dabei eine hohe Aufbruchsicherheit bieten, während das Gewicht vergleichsweise gering bleibt. Außerdem kann ein Gelenkstabschloss zwar eine, insbesondere im Vergleich zu einem Bügelschloss, große Länge aufweisen, aber dennoch besonders kompakt zusammenlegbar und somit gut transportierbar sein.

Um einfach und mit wenigen Handgriffen wie ein Zollstock zusammengelegt werden zu können, darf jedoch die Länge der einzelnen Gelenkstäbe nicht zu kurz und die Anzahl der Gelenkstäbe nicht zu hoch sein. Das hat zur Folge, dass die Gelenkstabanordnung nur einen polygonalen Verlauf aus wenigen geraden Abschnitten aufweisen kann, aber nicht um enge Kurven geführt werden kann. Insbesondere in beengten Umgebungen, z.B. wenn mehrere Fahrräder an einem einzelnen Laternenmast angeschlossen werden, ist es jedoch vorteilhaft, wenn das Riegelelement des jeweiligen Schlosses auch eng gebogene Verläufe aufweisen kann, um besonders flexibel einsetzbar zu sein.

Darum kann es zweckmäßig sein, dass das Riegelelement als eine Kette aus insbesondere im Vergleich zu den Gelenkstäben eines Gelenkstabschlosses vergleichsweise kurzen Gliedern ausgebildet ist, die untereinander gelenkig miteinander gekoppelt sind. Allerdings müssen, je kürzer die Glieder sind, desto mehr Glieder vorgesehen werden, damit das Riegelelement eine geeignete Länge aufweist. Eine große Anzahl von Gliedern führt jedoch dazu, dass sich das Riegelelement schlecht für den Transport zusammenlegen lässt, da entweder von Hand alle Glieder relativ zueinander in bestimmter Weise angeordnet bzw. ausgerichtet werden müssen, was bei einer großen Anzahl von Gliedern aufwendig sein kann, oder aber das Riegelelement ungeordnet zusammengelegt wird, dann aber weniger kompakt ist, als es sein könnte, und nur schlecht in ein Transportbehältnis, etwa einen am Zweirad befestigten Schlosshalter, definierten Ausmaßes einsetzbar ist.

Es ist eine Aufgabe der Erfindung, eine Kette für ein Kettenschloss bereitzustellen, die besonders flexibel verwendbar ist, für den Transport auf einfache Weise kompakt zusammenlegbar ist und dabei zugleich eine hohe Aufbruchsicherheit sowie ein vergleichsweise geringes Gewicht aufweist, sowie ein Kettenschloss mit einer solchen Kette bereitzustellen.

Die Aufgabe wird gelöst durch eine Kette mit den Merkmalen des Anspruchs 1 sowie durch ein Kettenschloss mit den Merkmalen des Anspruchs 12. Vorteilhafte Ausführungsformen der Erfindung ergeben sich aus den abhängigen Ansprüchen, der vorliegenden Beschreibung sowie den Figuren.

Die erfindungsgemäße Kette ist für ein Kettenschloss, insbesondere für ein Zweiradkettenschloss, ausgebildet, so dass sie insbesondere dazu geeignet ist, als Riegelelement eines Kettenschlosses verwendet zu werden. Zu diesem Zweck kann die Kette, insbesondere an ihren jeweiligen Enden oder an zumindest einem der Enden, entsprechend ausgebildet sein, beispielsweise indem dort ein oder mehrere Elemente eines Verriegelungsmechanismus oder ein oder mehrere mit einem Verriegelungsmechanismus zusammenwirkende Elemente, z.B. ein Kloben, vorgesehen sind. Das ist jedoch nicht zwingend erforderlich. Denn es kann auch vorgesehen sein, dass gewisse, nicht unbedingt in besonderer Weise für ein Verriegeln ausgebildete, Abschnitte der Kette an einem Schlosskörper des Kettenschlosses verriegelbar sind. Dazu kann der Schlosskörper beispielsweise eine Verriegelungsaufnahme aufweisen, in die ein jeweiliger dieser Abschnitte aufgenommen und dann mittels des, insbesondere an dem Schlosskörper ausgebildeten, Verriegelungsmechanismus gegen ein Verlassen der Verriegelungsaufnahme gesichert werden kann.

Erfindungsgemäß umfasst die Kette eine serielle Anordnung aufeinanderfolgender Glieder, die untereinander über eine jeweilige Gelenkverbindung miteinander gekoppelt und um eine zu einer Normalrichtung parallele Gelenkachse der jeweiligen Gelenkverbindung relativ zueinander schwenkbar sind. Mit anderen Worten sind die Glieder eines jeden Paares zweier unmittelbar aufeinanderfolgender Glieder der Anordnung über eine jeweilige Gelenkverbindung miteinander gekoppelt und um eine zu einer Normalrichtung parallele Gelenkachse der jeweiligen Gelenkverbindung relativ zueinander schwenkbar.

Die serielle Anordnung umfasst also eine Vielzahl von Gliedern, die in einer bestimmten Abfolge angeordnet sind. Das entlang dieser Abfolge erste und letzte Glied der Anordnung stellen Endglieder der Anordnung dar. Die Anordnung kann sich insbesondere von einem ersten Endglied bis zu einem zweiten Endglied erstrecken. Jedes Glied der Anordnung mit Ausnahme der beiden Endglieder ist jeweils mit dem ihm entlang der Abfolge vorangehenden Glied und mit dem ihm entlang der Abfolge nachfolgenden Glied über eine jeweilige Gelenkverbindung gekoppelt. Das erste Endglied, dem entlang der Abfolge kein Glied vorangeht, kann dabei lediglich mit dem ihm entlang der Abfolge nachfolgenden Glied der Anordnung über eine Gelenkverbindung gekoppelt sein, und das zweite Endglied, dem entlang der Abfolge kein Glied nachfolgt, kann dabei lediglich mit dem ihm entlang der Abfolge vorangehenden Glied der Anordnung über eine Gelenkverbindung gekoppelt sein. Grundsätzlich können sich aber an einem oder an beiden Enden der Anordnung noch weitere Elemente der Kette, insbesondere auch weitere Glieder, anschließen, die mit dem jeweiligen Ende gelenkig oder auf sonstige Weise gekoppelt sein können. Die Anordnung umfasst beispielsweise zumindest vier Glieder, vorzugsweise zumindest zehn, insbesondere zumindest 16 Glieder.

Alle Gelenkverbindungen, die jeweils zwei aufeinanderfolgende Glieder der Anordnung koppeln, weisen jeweils eine Gelenkachse auf, um welche die durch die jeweilige Gelenkverbindung gekoppelten Glieder relativ zueinander schwenkbar sind. Dabei sind alle diese Gelenkachsen parallel zu einer Normalrichtung und somit auch zueinander parallel ausgerichtet. Die Bezeichnung der gemeinsamen Ausrichtung der Gelenkachsen als Normalrichtung dient dabei lediglich der begrifflichen Unterscheidung von anderen Richtungen und soll weder eine Einschränkung auf eine bestimmte Raumrichtung noch eine besondere Eigenschaft der Richtung als "normal" implizieren.

Insbesondere sind die Gelenkverbindungen jeweils derart ausgebildet, dass die beiden durch die jeweilige Gelenkverbindung gekoppelten Glieder relativ zueinander ausschließlich um die genannte Gelenkachse der Gelenkverbindung schwenkbar sind und keine anderweitige relative Beweglichkeit aufweisen. Mit anderen Worten weisen die Gelenkverbindungen - von möglichem und grundsätzlich nicht völlig vermeidbarem Spiel, z.B. Versatz entlang der Gelenkachse und kleineren Kippbewegungen senkrecht zur Gelenkachse, abgesehen - jeweils nur einen Freiheitsgrad, nämlich die Schwenkbarkeit um die Gelenkachse, auf. Da somit alle Glieder um zueinander parallele Gelenkachsen schwenkbar sind, kann die Beweglichkeit der Glieder und somit der gesamten genannten Anordnung insgesamt auf Bewegungen innerhalb eines Raumbereichs beschränkt sein, der durch zwei zu der Normalrichtung senkrechte Ebenen begrenzt wird.

Die Glieder der Anordnung können sich jeweils entlang einer Längserstreckung von einem ersten Ende zu einem zweiten Ende des jeweiligen Gliedes erstrecken. Insbesondere kann dabei an dem ersten Ende eines jeweiligen Gliedes die Gelenkverbindung zur Kopplung mit dem jeweiligen vorangehenden Glied, sofern ein solches vorhanden ist, und an dem zweiten Ende eines jeweiligen Gliedes die Gelenkverbindung zur Kopplung mit dem jeweiligen nachfolgenden Glied, sofern ein solches vorhanden ist, vorgesehen sein. Die Richtung der Längserstreckung des jeweiligen Gliedes kann dann durch eine Gerade definiert sein, welche die beiden Gelenkverbindungen insbesondere senkrecht zur Normalrichtung verbindet. Die Längserstreckung eines jeweiligen Gliedes kann beispielsweise einige wenige Zentimeter betragen, z.B. im Bereich zwischen 2 cm und 10 cm liegen, vorzugsweise im Bereich zwischen 3 cm und 8 cm liegen, insbesondere im Bereich zwischen 4 cm und 6 cm liegen.

Die Glieder der Anordnung können grundsätzlich zueinander baugleich sein oder auch voneinander verschieden ausgebildet sein. Insbesondere ist es auch möglich, dass sich alle Glieder hinsichtlich ihrer Ausbildung, etwa hinsichtlich ihrer jeweiligen Längserstreckung und/oder ihrer jeweiligen Ausdehnung entlang der Normalrichtung, untereinander unterscheiden. Vorzugsweise sind die Gelenkachsen der Gelenkverbindungen jedoch zumindest regelmäßig voneinander beabstandet. Gemäß einer vorteilhaften Ausführungsform weisen alle Paare zweier jeweiliger entlang der seriellen Anordnung aufeinanderfolgender Gelenkverbindungen denselben Abstand zwischen ihren Gelenkachsen auf. Insbesondere können dabei alle Glieder der Anordnung dieselbe Längserstreckung aufweisen. Je nach Ausführungsform kann der genannte Abstand aber auch variieren.

Die genannte serielle Anordnung kann erste Glieder und zweite Glieder umfassen, die entlang der Abfolge der Glieder der Anordnung abwechselnd aufeinanderfolgen. Die Gelenkverbindungen koppeln also jeweils ein erstes Glied und ein zweites Glied miteinander, nämlich entweder ein erstes Glied mit einem ihm (entlang der Abfolge der Glieder der Anordnung) nachfolgenden zweiten Glied oder ein zweites Glied mit einem ihm (entlang der Abfolge der Glieder der Anordnung) nachfolgenden ersten Glied. Die Bezeichnung der Glieder als erste Glieder und zweite Glieder dient dabei primär der begrifflichen Unterscheidung der Glieder anhand ihrer jeweiligen Position innerhalb der seriellen Anordnung. Insbesondere können die Glieder an einer Position mit ungerader Ordnungszahl (1., 3., usw.) die zweiten Glieder sein, während die Glieder an einer Position mit gerader Ordnungszahl (2., 4., usw.) die ersten Glieder sind (es kann aber grundsätzlich auch gerade umgekehrt sein). Insofern handelt es sich bei dem genannten ersten Endglied um eines der zweiten Glieder der Anordnung. Abhängig von der Gesamtzahl an Gliedern der Anordnung kann es sich bei dem zweiten Endglied der Anordnung um eines der ersten Glieder oder um eines der zweiten Glieder der Anordnung handeln. Wenn im Folgenden von einem ersten Glied der Anordnung oder von einem zweiten Glied der Anordnung die Rede ist, dient dies jeweils dazu, sich auf ein oder mehrere Glieder an entsprechender Position innerhalb der Anordnung zu beziehen.

Die ersten Glieder müssen sich dabei nicht zwangsläufig von den zweiten Gliedern unterscheiden. Außerdem müssen weder die ersten Glieder noch die zweiten Glieder jeweils zwangsläufig untereinander gleichartig ausgebildet sein. Vorzugsweise jedoch sind die ersten Glieder und/oder die zweiten Glieder jeweils untereinander im Wesentlichen gleichartig, insbesondere baugleich (gegebenenfalls mit Ausnahme des ersten und/oder des zweiten Endgliedes der Anordnung), ausgebildet. Außerdem kann es zweckmäßig sein, dass sich die ersten Glieder von den zweiten Gliedern unterscheiden.

Die genannten Glieder der Anordnung können grundsätzlich ihrerseits weiter untergliedert sein, wobei die Unterglieder relativ zueinander beweglich, insbesondere schwenkbar, sein können. Vorzugsweise jedoch sind alle Glieder der Anordnung jeweils starr ausgebildet. Als Material können die Glieder der Anordnung insbesondere ein gehärtetes Metall umfassen.

Da die Kette die genannte serielle Anordnung untereinander schwenkbar gekoppelter Glieder umfasst, ist die Kette insofern zumindest teilweise, vorzugsweise zumindest im Wesentlichen vollständig, als Gelenkkette ausgebildet. Eine solche Gelenkkette aus durch Gelenkverbindungen verbundenen Gliedern ist von einer Gliederkette aus ringförmig ineinandergreifenden Gliedern zu unterscheiden, welche jeweils relativ zu dem vorangehenden oder nachfolgenden Glied weitgehend frei in alle drei Raumrichtungen verschwenkt und in beschränktem Umfang auch versetzt werden können.

Dabei ist es bevorzugt, wenn die Glieder der genannten Anordnung entlang der Normalrichtung zumindest teilweise dieselbe Lage einnehmen. Beispielsweise kann vorgesehen sein, dass an zumindest einigen, insbesondere an jeder, der Gelenkverbindungen, die ein jeweiliges Glied mit einem ihm vorangehenden Glied koppeln, das jeweilige Glied und das ihm vorangehende Glied entlang der Normalrichtung zumindest teilweise dieselbe Lage einnehmen.

Zwei Glieder, die entlang der Normalrichtung zumindest teilweise dieselbe Lage einnehmen, müssen sich nicht zwangsläufig entlang der Normalrichtung über denselben Bereich erstrecken, sondern können bezüglich der Normalrichtung unterschiedliche Ausdehnung aufweisen und/oder entlang der Normalrichtung relativ zueinander versetzt sein, jedoch nur so weit, dass sie bezüglich der Normalrichtung noch überlappen. Darin unterscheidet sich eine solche Ausführungsform insbesondere von Gelenkstabschlössern, deren Glieder jeweils durch einen einzelnen Gelenkstab gebildet werden und bezüglich der Richtung, zu welcher die Gelenkachsen der die Gelenkstäbe koppelnden Gelenkverbindungen parallel ausgerichtet sind, ähnlich den Gliedern eines Zollstocks derart versetzt zueinander angeordnet sind, dass sie entlang dieser Richtung nicht überlappen, sondern unterschiedliche Lagen aufweisen und dass folglich zwei aufeinanderfolgende Gelenkstäbe jeweils frei aneinander vorbei geschwenkt werden können.

Da zwei entlang der Normalrichtung zumindest teilweise dieselbe Lage einnehmende Glieder bezüglich der Normalrichtung überlappen, gibt es für zwei solche Glieder somit stets eine zu der Normalrichtung senkrechte Ebene, welche beide Glieder schneidet. Gemäß einer bevorzugten Ausführungsform kann insbesondere vorgesehen sein, dass es eine zu der Normalrichtung senkrechte Ebene gibt, die sämtliche Glieder der Anordnung schneidet. Die Ausdehnung eines jeweiligen Gliedes entlang der Normalrichtung kann dabei durch den Abstand, insbesondere Außenabstand, zweier Gliederplatten des jeweiligen Gliedes (falls das jeweilige Glied mehr Gliederplatten aufweist: der beiden äußersten Gliederplatten des jeweiligen Gliedes) definiert sein, so dass eine zu der Normalrichtung senkrechte Ebene das jeweilige Glied dann schneidet, wenn die Ebene zwischen den beiden Gliederplatten, insbesondere zwischen deren jeweiligen Außenseiten, verläuft.

Erfindungsgemäß ist die genannte serielle Anordnung in eine kompakte Aufbewahrungskonfiguration zusammenlegbar, in welcher an jeder der Gelenkverbindungen die beiden über die jeweilige Gelenkverbindung miteinander gekoppelten Glieder relativ zueinander eine Minimalschwenkstellung einnehmen, in der sie einen im Rahmen ihrer relativen Schwenkbarkeit kleinstmöglichen Winkel einschließen. Mit anderen Worten sind die beiden über die jeweilige Gelenkverbindung miteinander gekoppelten Glieder in der Minimalschwenkstellung so weit um die Gelenkachse der jeweiligen Gelenkverbindung relativ zueinander verschwenkt, dass sie einen im Rahmen ihrer relativen Schwenkbarkeit kleinstmöglichen Winkel einschließen.

Ein Winkel der von zwei über eine jeweilige Gelenkverbindung miteinander gekoppelten Gliedern eingeschlossen wird, kann insbesondere in Bezug auf die Richtung der jeweiligen Längserstreckung dieser Glieder definiert sein, die ihrerseits (wie oben bereits erwähnt) durch eine Gerade definiert sein kann, welche die Gelenkachsen der beiden Gelenkverbindungen, über die das jeweilige Glied mit einem vorangehenden bzw. mit einem nachfolgenden Glied gekoppelt ist, senkrecht zur Normalrichtung verbindet. Als der von den beiden Gliedern eingeschlossene Winkel wird dabei stets der kleinere der beiden zwischen den beiden Gliedern definierbaren und zusammen einen vollen Winkel von 360° ergebenden Winkel betrachtet. Außerdem wird der eingeschlossene Winkel betragsmäßig betrachtet und kann daher nicht kleiner als 0° sein.

Dabei können die über eine jeweilige Gelenkverbindung mit einem jeweiligen vorangehenden Glied gekoppelten Glieder der Anordnung in der kompakten Aufbewahrungskonfiguration beispielsweise abwechselnd in eine erste Schwenkrichtung und in eine zu der ersten Schwenkrichtung entgegengesetzte zweite Schwenkrichtung so weit relativ zu dem jeweiligen vorangehenden Glied um die Gelenkachse der jeweiligen Gelenkverbindung verschwenkt sein, dass sie den im Rahmen ihrer relativen Schwenkbarkeit kleinstmöglichen Winkel einschließen.

Insbesondere kann, wenn die Glieder der Anordnung, wie oben erläutert, als erste Glieder und zweite Glieder unterschieden werden, an jeder Gelenkverbindung, die ein erstes Glied der Anordnung mit einem ihm (entlang der Abfolge der Glieder der Anordnung) vorangehenden zweiten Glied der Anordnung koppelt, das erste Glied relativ zu dem ihm vorangehenden zweiten Glied in die erste Schwenkrichtung so weit um die Gelenkachse der jeweiligen Gelenkverbindung verschwenkt sein, dass die beiden Glieder den im Rahmen ihrer relativen Schwenkbarkeit kleinstmöglichen Winkel einschließen, und an jeder Gelenkverbindung, die ein zweites Glied der Anordnung mit einem ihm (entlang der Abfolge der Glieder der Anordnung) vorangehenden ersten Glied der Anordnung koppelt, das zweite Glied relativ zu dem ihm vorangehenden ersten Glied in die zweite Schwenkrichtung so weit um die Gelenkachse der jeweiligen Gelenkverbindung verschwenkt sein, dass die beiden Glieder den im Rahmen ihrer relativen Schwenkbarkeit kleinstmöglichen Winkel einschließen.

Der genannte kleinstmögliche Winkel ist in allen diesen Fällen auf die Schwenkbarkeit der beiden den Winkel einschließenden Glieder der Anordnung relativ zueinander bezogen, d.h. darauf, wie weit das eine Glied relativ zu dem anderen Glied verschwenkt werden kann. Mit anderen Worten ist der Winkel insofern im Rahmen der relativen Schwenkbarkeit der beiden jeweiligen Glieder kleinstmöglich, als er entweder grundsätzlich nicht kleiner werden kann, weil die beiden Glieder einen Winkel von 0° einschließen, oder einer Grenze der relativen Schwenkbarkeit entspricht, über die hinaus die beiden Glieder nicht aufeinander zu verschwenkt werden können. Dies wird im Folgenden näher erläutert.

Grundsätzlich kann die relative Schwenkbarkeit zweier aufeinanderfolgender und über eine jeweilige Gelenkverbindung miteinander gekoppelter Glieder der Anordnung unbeschränkt sein, so dass eine volle Umdrehung des einen Gliedes relativ zu dem anderen Glied um die Gelenkachse möglich ist.

Allerdings kann die relative Schwenkbarkeit zweier aufeinanderfolgender und über eine jeweilige Gelenkverbindung miteinander gekoppelter Glieder auch auf einen bestimmten Schwenkbereich beschränkt sein. Zumindest in eine jeweilige Schwenkrichtung kann sich die Beschränkung insbesondere daraus ergeben, dass die Glieder, wenn sie aufeinander zu verschwenkt werden, letztlich aufeinandertreffen und daher nicht bis in dieselbe Ausrichtung relativ zur Gelenkachse der jeweiligen Gelenkverbindung geschwenkt werden können, was einem eingeschlossenen Winkel von 0° entsprechen würde. Die Winkelausdehnung des beschränkten Schwenkbereichs ist dabei vorzugsweise für alle der genannten Gelenkverbindungen identisch. Beispielsweise kann die Winkelausdehnung im Bereich zwischen 300° und 350° liegen. Je nach Ausführungsform der Erfindung kann die Winkelausdehnung des Schwenkbereichs aber auch wesentlich kleiner sein, insbesondere maximal 170° betragen, beispielsweise im Bereich zwischen 120° und 150° liegen. Sofern sich zwei miteinander gekoppelte Glieder im Rahmen ihrer Schwenkbarkeit in eine ausgestreckte Stellung verschwenken lassen, in welcher sie hinsichtlich ihrer jeweiligen Längserstreckung entlang einer geraden Linie angeordnet sind, so dass sie einen Winkel von 180° einschließen, kann das eine der beiden Glieder relativ zu dem anderen insbesondere um weniger als 180° aus dieser ausgestreckten Stellung verschwenkbar sein. Beispielsweise kann das eine Glied relativ zu dem anderen aus der ausgestreckten Stellung maximal um einen Winkel im Bereich zwischen 120° und 175° verschwenkt werden.

Es lassen sich also zwei Fälle unterscheiden: Sofern zwei über eine jeweilige Gelenkverbindung miteinander gekoppelte Glieder der Anordnung relativ zueinander in eine Stellung verschwenkt werden können, in der sie einen Winkel von 0° einschließen, also von der Gelenkachse der jeweiligen Gelenkverbindung aus in dieselbe Richtung weisen, entspricht der genannte im Rahmen der relativen Schwenkbarkeit der beiden Glieder kleinstmögliche Winkel diesem Winkel von 0°, und zwar unabhängig davon, ob die relative Schwenkbarkeit der beiden Glieder ansonsten beschränkt ist oder nicht. Ist hingegen die relative Schwenkbarkeit zweier über eine jeweilige Gelenkverbindung miteinander gekoppelter Glieder der Anordnung derart beschränkt, dass sie eine solche Stellung nicht einnehmen können, entspricht der genannte im Rahmen der relativen Schwenkbarkeit der beiden Glieder kleinstmögliche Winkel einem der beiden Ränder des Schwenkbereichs, auf welchen die relative Schwenkbarkeit der beiden Glieder beschränkt ist, insbesondere demjenigen der beiden Ränder, an welchem die beiden Glieder den betragsmäßig kleineren Winkel einschließen. Der genannte kleinstmögliche Winkel kann dabei beispielsweise kleiner oder gleich 30°, vorzugsweise kleiner oder gleich 25°, insbesondere kleiner oder gleich 20° sein, z.B. etwa 15° betragen.

Dass zwei über eine jeweilige Gelenkverbindung miteinander gekoppelte Glieder der Anordnung beim Verschwenken aufeinandertreffen und ihre relative Schwenkbarkeit somit zumindest einseitig beschränkt ist, kann sich (wie oben bereits erwähnt) insbesondere dadurch ergeben, dass an zumindest einigen der Gelenkverbindungen die beiden über die jeweilige Gelenkverbindung miteinander gekoppelten Glieder entlang der Normalrichtung zumindest teilweise dieselbe Lage einnehmen.

Sofern von zwei über eine jeweilige Gelenkverbindung miteinander gekoppelten Gliedern der Anordnung, die entlang der Normalrichtung zumindest teilweise dieselbe Lage einnehmen, nicht eines durch das andere hindurch geführt werden kann (etwa durch eine Durchgangsöffnung des anderen), treffen die Glieder, wenn sie relativ zueinander aufeinander zu verschwenkt werden, irgendwann aufeinander, so dass ihre relative Schwenkbarkeit zumindest einseitig beschränkt ist und der kleinstmögliche Winkel, den sie im Rahmen ihrer relativen Schwenkbarkeit einschließen können, demjenigen entspricht, in welchem sie aufeinandertreffen. Aus diesem Grund lässt sich die serielle Anordnung der erfindungsgemäßen Kette bzw. der Kette des erfindungsgemäßen Kettenschlosses, wenn der kleinstmögliche Winkel, den zwei aufeinanderfolgende Glieder der Anordnung im Rahmen ihrer relativen Schwenkbarkeit einschließen können, größer als 0° ist, nicht nach Art eines Zollstocks zusammenlegen. Gleichwohl kann auch in diesem Fall die Aufbewahrungskonfiguration vergleichsweise kompakt sein, insbesondere wenn, wie oben erläutert, die Glieder der Anordnung in der Aufbewahrungskonfiguration relativ zu dem jeweiligen vorangehenden Glied abwechselnd in eine erste Schwenkrichtung und eine dazu entgegengesetzte zweite Schwenkrichtung um die Gelenkachse der jeweiligen Gelenkverbindung verschwenkt sind, so dass die Anordnung in ihrer Aufbewahrungskonfiguration einen zickzackartigen Verlauf aufweist.

Dabei können in der Aufbewahrungskonfiguration alle Winkel zwischen einem jeweiligen relativ zu dem ihm vorangehenden Glied in die erste Schwenkrichtung verschwenkten (ersten) Glied und dem ihm vorangehenden (zweiten) Glied der Anordnung untereinander identisch sein. Zudem können in der Aufbewahrungskonfiguration alle Winkel zwischen einem jeweiligen relativ zu dem ihm vorangehenden Glied in die zweite Schwenkrichtung verschwenkten (zweiten) Glied und dem ihm vorangehenden (ersten) Glied der Anordnung untereinander identisch sein. Darüber hinaus können in der Aufbewahrungskonfiguration alle Winkel zwischen einem jeweiligen Glied und dem ihm vorangehenden Glied der Anordnung untereinander identisch sein.

Ferner können, wenn die Glieder der Anordnung, wie oben erläutert, als erste Glieder und zweite Glieder unterschieden werden, in der Aufbewahrungskonfiguration alle ersten Glieder der Anordnung parallel zueinander ausgerichtet und entlang einer zu der Normalrichtung senkrechten Längserstreckung der kompakt zusammengelegten Anordnung versetzt zueinander angeordnet sein; vorzugsweise sind die ersten Glieder dabei entlang der Normalrichtung nicht versetzt zueinander angeordnet, sondern weisen bezüglich der Normalrichtung alle dieselbe Lage auf. Zudem können in der Aufbewahrungskonfiguration alle zweiten Glieder der Anordnung parallel zueinander ausgerichtet und entlang einer zu der Normalrichtung senkrechten Längserstreckung der kompakt zusammengelegten Anordnung versetzt zueinander angeordnet sein; vorzugsweise sind die zweiten Glieder dabei entlang der Normalrichtung nicht versetzt zueinander angeordnet, sondern weisen bezüglich der Normalrichtung alle dieselbe Lage auf. Wenn sowohl die ersten als auch die zweiten Glieder in der Aufbewahrungskonfiguration jeweils parallel zueinander ausgerichtet sind, sind die Richtung, in welche die ersten Glieder dabei parallel zueinander ausgerichtet sind, und die Richtung, in welche die zweiten Glieder dabei parallel zueinander ausgerichtet sind, voneinander verschieden. Die beiden Richtungen können beispielsweise einen Winkel im Bereich zwischen 10° und 60°, insbesondere einen Winkel im Bereich zwischen 15° und 40°, vorzugsweise einen Winkel von etwa 20°, 25° oder 30°, zwischen sich einschließen.

In der Aufbewahrungskonfiguration können außerdem die ersten Glieder der Anordnung seitlich, d.h. in eine Richtung senkrecht zur Normalrichtung und quer zu der Längserstreckung des jeweiligen Gliedes, aneinander anliegen und/oder können die zweiten Glieder der Anordnung seitlich, d.h. in eine Richtung senkrecht zur Normalrichtung und quer zu der genannten Längserstreckung des jeweiligen Gliedes, aneinander anliegen. Insbesondere kann die Schwenkbarkeit eines jeweiligen ersten und/oder zweiten Gliedes zumindest einseitig gerade dadurch beschränkt sein, dass es seitlich auf das jeweils übernächste vorangehende oder nachfolgende Glied der Anordnung, sofern ein solches vorhanden ist, trifft.

Jedes der Glieder der Anordnung kann beispielsweise zwei jeweilige Gliederplatten umfassen, die entlang der Normalrichtung versetzt zueinander angeordnet sind, wobei sich jede der zwei Gliederplatten von einem ersten Ende des jeweiligen Gliedes, an dem die Gelenkverbindung zur Kopplung mit dem ihm vorangehenden Glied ausgebildet ist, zu einem dazu entgegengesetzten zweiten Ende des jeweiligen Gliedes, an dem die Gelenkverbindung zur Kopplung mit dem ihm nachfolgenden Glied ausgebildet ist, erstreckt. Es versteht sich, dass an dem ersten Ende des jeweiligen Gliedes nur dann eine Gelenkverbindung zur Kopplung mit dem ihm vorangehenden Glied ausgebildet ist, sofern ihm tatsächlich ein Glied vorangeht, was insbesondere für das genannte erste Endglied nicht unbedingt der Fall ist. In entsprechender Weise versteht es sich, dass an dem zweiten Ende des jeweiligen Gliedes nur dann eine Gelenkverbindung zur Kopplung mit dem ihm nachfolgenden Glied ausgebildet ist, sofern ihm tatsächlich ein Glied nachfolgt, was insbesondere für das genannte zweite Endglied nicht unbedingt der Fall ist.

Die Glieder der Anordnung sind dabei nicht darauf beschränkt, genau zwei Gliederplatten aufzuweisen. Neben den genannten zwei Gliederplatten können die Glieder der Anordnung jeweils auch noch weitere, insbesondere gleichartige, Gliederplatten umfassen. Wenn im Folgenden von den zwei Gliederplatten eines jeweiligen Gliedes die Rede ist, bezieht sich dies bei Gliedern, die mehr als zwei Gliederplatten aufweisen, jeweils vorzugsweise auf die zwei entlang der Normalrichtung äußersten Gliederplatten des jeweiligen Gliedes.

Die Gliederplatten eines jeweiligen Gliedes werden auch als Laschen bezeichnet und können jeweils als starre, flache und längliche Platte ausgebildet sein und/ oder untereinander dieselbe Form aufweisen. Vorzugsweise sind die Gliederplatten parallel zueinander, insbesondere jeweils senkrecht zur Normalrichtung, ausgerichtet. Als Material können die Gliederplatten insbesondere ein gehärtetes Metall umfassen.

Die Glieder der Anordnung können jeweils, abgesehen von Elementen, die einer der Gelenkverbindungen zuzuordnen sind, im Wesentlichen aus den genannten Gliederplatten bestehen. Mit anderen Worten können die Glieder, unter Umständen mit Ausnahme des ersten und/oder des zweiten Endgliedes, jeweils ausschließlich die Gliederplatten sowie allenfalls noch Elemente umfassen, die Teil einer jeweiligen Gelenkverbindung sind (zum Beispiel einen oder mehrere Bolzen bzw. Hülsen sowie gegebenenfalls Rollen, wie weiter unten erläutert wird), jedoch vorzugsweise keine sonstigen Elemente. Eine solche Ausbildung trägt zu einem geringen Gewicht der Kette bei.

Die zwei Gliederplatten eines jeweiligen Gliedes weisen bezüglich der Normalrichtung, entlang welcher sie versetzt zueinander angeordnet sind, einen Abstand zueinander auf. Da die Gliederplatten jeweils eine gewisse Dicke aufweisen, kann dabei als Abstand der Außenabstand, der mittlere Abstand oder der Innenabstand betrachtet werden. Vorzugsweise ist der Abstand zwischen den zwei Gliederplatten für alle ersten Glieder der Anordnung gleich und/oder ist der Abstand zwischen den zwei Gliederplatten für alle zweiten Glieder der Anordnung gleich, wobei der Abstand bei den ersten Gliedern anders als bei den zweiten Gliedern sein kann.

Insbesondere können die Glieder der Anordnung abwechselnd einen größeren Abstand und einen kleineren Abstand zwischen ihren zwei jeweiligen Gliederplatten aufweisen. Beispielsweise kann der Abstand der zwei Gliederplatten bei den genannten ersten Gliedern größer sein als bei den genannten zweiten Gliedern. Vorzugsweise ist dabei der Innenabstand der Gliederplatten bei den ersten Gliedern größer als der Außenabstand der Gliederplatten bei den zweiten Gliedern (oder gerade umgekehrt). Auf diese Weise können im Bereich einer zwei Glieder miteinander koppelnden Gelenkverbindung jeweils die Gliederplatten des zweiten Gliedes bezogen auf die Normalrichtung zwischen den Gliederplatten des ersten Gliedes angeordnet sein.

Der Innenabstand der Gliederplatten bei den Gliedern mit dem größeren Abstand kann insbesondere nahezu identisch (mit einer Abweichung von weniger als 1 mm, insbesondere weniger als 0,5 mm) zum Außenabstand der Gliederplatten bei den Gliedern mit dem geringeren Abstand sein, so dass im Bereich einer Gelenkverbindung die Gliederplatten des einen Gliedes jeweils an einer der Gliederplatten des anderen Gliedes flächig anliegen.

Der Abstand zwischen den zwei Gliederplatten ist vorzugsweise über die gesamte Längserstreckung eines jeweiligen Gliedes konstant oder zumindest an den beiden Enden des jeweiligen Gliedes identisch. Der Abstand kann dabei beispielsweise im Bereich zwischen 0,5 cm und 4 cm liegen. Der Abstand zwischen den zwei Gliederplatten eines jeweiligen Gliedes kann sich aber entlang der Längserstreckung des Gliedes auch verändern, zum Beispiel wenn die Gliederplatten bezüglich der Normalrichtung schräg angeordnet sind und/oder gestuft ausgebildet sind.

Die serielle Anordnung abwechselnd aufeinanderfolgender Glieder kann insbesondere als eine Bolzenkette ausgebildet sein, bei der die Gelenkverbindungen im Wesentlichen durch Bolzen gebildet werden, welche die Gliederplatten der durch die jeweilige Gelenkverbindung gekoppelten Glieder an deren jeweiligem Ende durchgreift. Der Bolzen definiert dann die Gelenkachse der jeweiligen Gelenkverbindung. Insbesondere kann die gesamte Kette als eine solche Bolzenkette ausgebildet sein.

Wenn die Glieder der Anordnung jeweils mehr als zwei Gliederplatten umfassen, kann die Anordnung oder die gesamte Kette auch als Flyerkette ausgebildet sein. Wenn die Glieder der Anordnung, wie oben erläutert, als erste Glieder und zweite Glieder unterschieden werden und entweder die ersten oder die zweiten Glieder der Anordnung jeweils zwei Gliederplatten aufweisen, die jeweils anderen Glieder der Anordnung aber einen blockartigen Körper aufweisen, kann die Anordnung oder die gesamte Kette insbesondere auch als Blockkette ausgebildet sein.

Die Gelenkverbindungen können beispielsweise jeweils einen Bolzen umfassen, der an dem einen von der jeweiligen Gelenkverbindung gekoppelten Glied (beispielsweise an dem von der jeweiligen Gelenkverbindung gekoppelten ersten Glied) ausgebildet ist, sowie eine Hülse umfassen, die an dem anderen von der jeweiligen Gelenkverbindung gekoppelten Glied (beispielsweise an dem von der jeweiligen Gelenkverbindung gekoppelten zweiten Glied) ausgebildet ist und von dem Bolzen derart durchgriffen wird, dass sie um den Bolzen schwenkbar ist. Insofern kann die Anordnung, insbesondere die gesamte Kette, als Hülsenkette (auch Buchsenkette genannt) ausgebildet sein.

Die Hülse kann insbesondere eine Zylinderform mit offenen Stirnseiten aufweisen. Der Bolzen kann in die Hülse aufgenommen sein und die Hülse insofern durchgreifen, als er sich dabei durch beide offenen Stirnseiten hindurch erstreckt. Dazu ist es zweckmäßig, dass der Bolzen eine größere axiale Länge als die Hülse aufweist. Sofern die zwei durch die jeweilige Gelenkverbindung gekoppelten Glieder jeweils zwei Gliederplatten aufweisen, kann der Bolzen durch Öffnungen oder Bohrungen, die in den insgesamt vier Gliederplatten an den miteinander gekoppelten Enden der zwei Glieder ausgebildet sind, hindurchgeführt sein und beispielsweise durch Umfangserweiterungen an den Enden seiner axialen Erstreckung darin fixiert sein. Die Hülse kann die Öffnungen oder Bohrungen der im Bereich der jeweiligen Gelenkverbindung inneren zwei der vier Gliederplatten miteinander verbinden und somit zugleich als Abstandshalter für die Gliederplatten fungieren.

Die Gelenkverbindungen können ferner jeweils eine Rolle umfassen, die drehbar um die Hülse herum gelagert ist und vorzugsweise zumindest im Wesentlichen dieselbe axiale Erstreckung wie die Hülse aufweist. Die Anordnung, insbesondere die gesamte Kette, kann insofern als Rollenkette ausgebildet sein.

Erfindungsgemäß ist an zumindest einigen, vorzugsweise an jeder, der Gelenkverbindungen eine Vorgabevorrichtung, insbesondere in Form einer Schwenkwinkelbegrenzung und/oder einer Vorspannvorrichtung, vorgesehen, welche den beiden über die jeweilige Gelenkverbindung miteinander gekoppelten Gliedern eine Schwenkrichtung vorgibt, in welche sie beim Zusammenlegen der Anordnung relativ zueinander verschwenkt werden, insbesondere so, dass die Anordnung ihre kompakte Aufbewahrungskonfiguration einnimmt. Bei der vorgegebenen Schwenkrichtung kann es sich insbesondere um diejenige handeln, in der (auf kürzestem Weg) die genannte Minimalschwenkstellung zu erreichen ist. Das genannte Zusammenlegen der Anordnung kann insbesondere umfassen oder sich sogar darauf beschränken, dass die beiden Enden der Anordnung (ggf. nachdem sie zunächst maximal weit auseinandergezogen wurden) aufeinander zu bewegt werden. Die Bezeichnung der Vorgabevorrichtung als "Vorgabevorrichtung" beruht dabei auf dieser Funktion, den über die jeweilige Gelenkverbindung miteinander gekoppelten Gliedern beim Zusammenlegen der Anordnung eine Schwenkrichtung vorzugeben, und soll darüber hinaus nichts implizieren.

Es müssen nicht unbedingt alle an einer jeweiligen Gelenkverbindung der Kette vorgesehenen Vorgabevorrichtungen gleichartig ausgebildet sein. Beispielsweise kommt in Betracht, dass an jeder zweiten Gelenkverbindung eine in Form einer Schwenkwinkelbegrenzung ausgebildete Vorgabevorrichtung vorgesehen ist, während an jeder übrigen Gelenkverbindung eine in Form einer Vorspannvorrichtung ausgebildete Vorgabevorrichtung vorgesehen ist. Grundsätzlich kommt auch in Betracht, dass eine oder mehrere einzelne an einer jeweiligen Gelenkverbindung vorgesehene Vorgabevorrichtungen sowohl als Schwenkwinkelbegrenzung als auch als Vorspannvorrichtung ausgebildet sind, indem sie sowohl eine Schwenkwinkelbegrenzung als auch eine Vorspannvorrichtung umfassen.

Dadurch, dass die Vorgabevorrichtungen den beiden jeweiligen Gliedern eine Schwenkrichtung vorgeben, werden die beiden Glieder beim Zusammenlegen der Anordnung vorzugsweise automatisch bzw. selbsttätig, allenfalls durch die Schwerkraft unterstützt, in die jeweilige Schwenkrichtung relativ zueinander verschwenkt, in der sie die Minimalschwenkstellung erreichen, wodurch die Anordnung letztlich ihre kompakte Aufbewahrungskonfiguration einnimmt. Insbesondere ist dabei kein manuelles Verschwenken eines der beiden Glieder relativ zu dem anderen erforderlich. Vorteilhafterweise kann es somit ausreichen, dass die beiden Enden der Anordnung (ggf. nachdem sie zunächst maximal weit auseinandergezogen wurden) aufeinander zu bewegt werden, um die Anordnung in ihre kompakte Aufbewahrungskonfiguration zusammenzulegen, weil die Glieder der Anordnung dabei dank der Vorgabevorrichtungen in der für das Zusammenlegen korrekten Weise, insbesondere in die jeweilige korrekte Schwenkrichtung, relativ zueinander verschwenkt werden.

Gemäß einer vorteilhaften Ausführungsform geben die Vorgabevorrichtungen den beiden über die jeweilige Gelenkverbindung (damit ist diejenige Gelenkverbindung gemeint, an der die jeweilige Vorgabevorrichtung vorgesehen ist) miteinander gekoppelten Gliedern entlang der Anordnung abwechselnd eine erste Schwenkrichtung bzw. eine dazu (d. h. zu der ersten Schwenkrichtung) entgegengesetzte zweite Schwenkrichtung vor, in welche die beiden Glieder beim Zusammenlegen der Anordnung relativ zueinander verschwenkt werden, insbesondere so, dass die Anordnung ihre kompakte Aufbewahrungskonfiguration einnimmt. Im Ergebnis sind dann also die über eine jeweilige Gelenkverbindung mit einem jeweiligen vorangehenden Glied gekoppelten Glieder der Anordnung in der kompakten Aufbewahrungskonfiguration abwechselnd in die erste Schwenkrichtung und in die dazu entgegengesetzte zweite Schwenkrichtung relativ zu dem jeweiligen vorangehenden Glied in die Minimalschwenkstellung verschwenkt, also so weit relativ zu dem jeweiligen vorangehenden Glied um die Gelenkachse der jeweiligen Gelenkverbindung verschwenkt, dass sie mit dem jeweiligen vorangehenden Glied den im Rahmen ihrer relativen Schwenkbarkeit kleinstmöglichen Winkel einschließen.

Beispielsweise kann vorgesehen sein, dass eine der Vorgabevorrichtungen den beiden jeweiligen Gliedern (d.h. den über die jeweilige Gelenkverbindung, an der sie vorgesehen ist, miteinander gekoppelten Gliedern) die erste Schwenkrichtung vorgibt, die entlang der Anordnung nächste Vorgabevorrichtung den beiden jeweiligen Gliedern dann die zweite Schwenkrichtung vorgibt, die wiederum nächste Vorgabevorrichtung dann wieder die erste Schwenkrichtung usw. Es kann auch vorgesehen sein, dass an einer der Gelenkverbindungen die beiden darüber miteinander gekoppelten Glieder von der jeweiligen Vorgabevorrichtung die erste Schwenkrichtung vorgegeben bekommen, an der entlang der Anordnung nächsten Gelenkverbindung die beiden jeweiligen Glieder von der dortigen Vorgabevorrichtung die zweite Schwenkrichtung vorgegeben bekommen, an der wiederum nächsten Gelenkverbindung die beiden jeweiligen Glieder dann wieder die erste Schwenkrichtung vorgegeben bekommen usw. Auf diese Weise wird der Anordnung eine Zickzackform vorgegeben, in der sie besonders kompakt zusammengelegt sein kann.

Gemäß einer weiteren vorteilhaften Ausführungsform ist die Vorgabevorrichtung als Schwenkwinkelbegrenzung ausgebildet, welche die Schwenkbarkeit der beiden über die jeweilige Gelenkverbindung miteinander gekoppelten Glieder relativ zueinander darauf begrenzt, aus der Minimalschwenkstellung bis in eine Maximalschwenkstellung verschwenkt zu werden, in der sie einen im Rahmen ihrer relativen Schwenkbarkeit größtmöglichen Winkel einschließen, wobei dieser größtmögliche Winkel kleiner als 180°, insbesondere kleiner als 170°, ist. Dies ist für zumindest eine, vorzugsweise für jede, der an einer jeweiligen Gelenkverbindung der Kette vorgesehenen Vorgabevorrichtungen der Fall. Die Vorgabevorrichtung ist dabei zumindest teilweise als Schwenkwinkelbegrenzung ausgebildet, kann also zusätzlich zu der Schwenkwinkelbegrenzung grundsätzlich noch mehr umfassen, insbesondere auch eine Vorspannvorrichtung.

Bei dieser Ausführungsform wird durch die Schwenkwinkelbegrenzung die Schwenkbarkeit der beiden über die jeweilige Gelenkverbindung miteinander gekoppelten Glieder relativ zueinander auf einen Schwenkbereich begrenzt, der sich von der Minimalschwenkstellung bis zu der Maximalschwenkstellung erstreckt und keine Schwenkstellung der beiden Glieder relativ zueinander umfasst, in der die beiden Glieder einen Winkel von 180° einschließen (denn ansonsten wäre der im Rahmen der Schwenkbarkeit größtmögliche Winkel nicht kleiner als 180°).

Die genannte Begrenzung der Schwenkbarkeit hat zur Folge, dass die beiden Glieder relativ zueinander nie die weiter oben genannte ausgestreckte Stellung einnehmen können, in der sie in Bezug auf die Gelenkachse in diametral entgegengesetzte Richtungen weisend ausgerichtet sind, und dass sie somit auch nicht über eine solche Stellung hinweg verschwenkt werden können. Bei einem Verschwenken aus der Minimalschwenkstellung in die Maximalschwenkstellung nimmt der von den beiden Gliedern eingeschlossene Winkel daher kontinuierlich zu und bei einem Verschwenken aus der Maximalschwenkstellung in die Minimalschwenkstellung kontinuierlich ab. Das hat zur Folge, dass sich der von den beiden Gliedern eingeschlossene Winkel bei einem Zusammenlegen der Kette zwangsläufig nur in eine bestimmte jeweilige Schwenkrichtung, nämlich nur in Richtung zur Minimalschwenkstellung verringern kann. Auf diese Weise wird erreicht, dass die Anordnung, wenn ihre Enden aufeinander zu bewegt werden und dadurch auch zwei jeweilige miteinander gekoppelte Glieder aufeinander zu bewegt werden, im Wesentlichen zwangsläufig in ihre kompakte Aufbewahrungskonfiguration zusammengelegt wird.

Wenn zwei über eine jeweilige Gelenkverbindung miteinander gekoppelte Glieder relativ zueinander ihre Maximalschwenkstellung einnehmen, schließen sie den im Rahmen ihrer relativen Schwenkbarkeit größtmöglichen Winkel ein. Daher kann die serielle Anordnung aufeinanderfolgender Glieder insbesondere genau dann ihre größte Ausdehnung (den größten Abstand ihrer beiden Enden voneinander) aufweisen, wenn an allen Gelenkverbindungen die beiden über die jeweilige Gelenkverbindung miteinander gekoppelten Glieder relativ zueinander die Maximalschwenkstellung einnehmen. Im Vergleich zu diesem Zustand kann die Anordnung in der kompakten Aufbewahrungskonfiguration eine wesentlich reduzierte Ausdehnung aufweisen. Dadurch kann die Kette besonders gut zu verstauen und zu transportieren sein. Beispielsweise kann eine Tasche für die Kette, insbesondere für das gesamte Kettenschloss, vorgesehen sein, die an die kompakten Ausmaße der Kette in der Aufbewahrungskonfiguration angepasst ist und in welcher die Kette bündig aufgenommen werden kann.

Gemäß einer vorteilhaften Weiterbildung der vorstehenden Ausführungsform umfasst die Schwenkwinkelbegrenzung zumindest einen Anschlagabschnitt, der an einem der beiden über die jeweilige Gelenkverbindung miteinander gekoppelten Glieder ausgebildet ist und an dem das jeweils andere der beiden Glieder anschlägt, wenn die beiden Glieder relativ zueinander in die Maximalschwenkstellung verschwenkt werden. Dies ist für die Schwenkwinkelbegrenzung zumindest einer, vorzugsweise für die Schwenkwinkelbegrenzungen jeder, der an einer jeweiligen Gelenkverbindung der Kette vorgesehenen Vorgabevorrichtungen der Fall.

Das eine der beiden über die jeweilige Gelenkverbindung miteinander gekoppelten Glieder kann insbesondere mit Erreichen der Maximalschwenkstellung an dem an dem jeweils anderen der beiden Glieder ausgebildeten Anschlagabschnitt anschlagen. Insofern kann sich die Begrenzung der Schwenkbarkeit gerade durch dieses Anschlagen ergeben. Der Anschlagabschnitt ist dabei derart angeordnet, dass die beiden Glieder in der durch das Anschlagen definierten Maximalschwenkstellung als im Rahmen ihrer relativen Schwenkbarkeit größtmöglichen Winkel einen Winkel einschließen, der kleiner als 180° ist. Insbesondere kann der Anschlagabschnitt eine zur Gelenkachse der jeweiligen Gelenkverbindung parallele Anschlagfläche aufweisen, gegen die das jeweilige Glied anschlägt. Vorzugsweise ist die Anschlagfläche derart ausgerichtet, dass das jeweilige Glied dabei senkrecht auf die Anschlagfläche trifft.

Gemäß einer alternativen Weiterbildung der genannten Ausführungsform ist die Schwenkwinkelbegrenzung von den Gliedern, deren Schwenkbarkeit sie begrenzt, (also denjenigen beiden Gliedern, die über die jeweilige Gelenkverbindung miteinander gekoppelt sind, an der die als Schwenkwinkelbegrenzung ausgebildete Vorgabevorrichtung vorgesehen ist) separat ausgebildet. Insbesondere kann die Schwenkwinkelbegrenzung an der jeweiligen Gelenkverbindung, welche die beiden Glieder miteinander gekoppelt, befestigt sein. Dabei kann die Schwenkwinkelbegrenzung, insbesondere solange die beiden Glieder nicht ihre Maximalschwenkstellung einnehmen, zumindest in begrenztem Umfang um die Gelenkachse der jeweiligen Gelenkverbindung drehbar sein.

Eine solche separat ausgebildete Schwenkwinkelbegrenzung kann gemäß einer weiteren vorteilhaften Ausführungsform zumindest einen ersten Anschlagabschnitt und zumindest einen zweiten Anschlagabschnitt aufweisen und derart an der jeweiligen Gelenkverbindung (d. h. der Gelenkverbindung, an der die jeweilige die Schwenkwinkelbegrenzung umfassende Vorgabevorrichtung vorgesehen ist) angeordnet, insbesondere unmittelbar daran befestigt, sein, dass das eine der beiden über die jeweilige Gelenkverbindung miteinander gekoppelten Glieder an dem ersten Anschlagabschnitt anschlägt und das andere der beiden über die jeweilige Gelenkverbindung miteinander gekoppelten Glieder an dem zweiten Anschlagabschnitt anschlägt, wenn die beiden Glieder relativ zueinander in die Maximalschwenkstellung verschwenkt werden.

Der erste Anschlagabschnitt und der zweite Anschlagabschnitt können jeweils eine zur Gelenkachse der jeweiligen Gelenkverbindung parallele Anschlagfläche aufweisen, gegen die das jeweilige Glied anschlägt. Ferner ist es zweckmäßig, wenn die beiden Anschlagabschnitte so angeordnet und ausgerichtet sind, dass, wenn die beiden Glieder voneinander weg verschwenkt werden, das eine der beiden Glieder in die eine der beiden möglichen Schwenkrichtungen und das andere Glied in die dazu entgegengesetzte Schwenkrichtung an einem jeweiligen der beiden Anschlagabschnitte anschlagen. Die Glieder können insbesondere gerade mit Erreichen der Maximalschwenkstellung an dem jeweiligen Anschlagabschnitt anschlagen. Insofern kann sich die Begrenzung der Schwenkbarkeit gerade durch dieses Anschlagen ergeben.

Gemäß einer weiteren vorteilhaften Ausführungsform umfasst die Schwenkwinkelbegrenzung zumindest ein Sperrelement, an dem der zumindest eine erste Anschlagabschnitt und der zumindest eine zweite Anschlagabschnitt ausgebildet sind. Ein solches Sperrelement, das vorzugsweise nicht nur separat von den Gliedern der Anordnung, sondern auch von den Gelenkverbindungen ausgebildet ist, kann speziell zu dem Zweck vorgesehen werden, die Anschlagabschnitte für die Schwenkwinkelbegrenzung bereitzustellen. Vorzugsweise lässt sich das Sperrelement auf einfache Weise an einer jeweiligen der Gelenkverbindungen befestigen.

Dabei kann insbesondere vorgesehen sein, dass das Sperrelement einen Basisabschnitt aufweist, der sich um die Gelenkachse der Gelenkverbindung, an der die Schwenkwinkelbegrenzung vorgesehen ist, herum erstreckt und von dem der erste Anschlagabschnitt und der zweite Anschlagabschnitt parallel zur Gelenkachse vorstehen. Vorzugsweise stehen die beiden Anschlagabschnitte dabei in dieselbe zur Gelenkachse parallele Richtung von dem Basisabschnitt vor.

Der erste Anschlagabschnitt und der zweite Anschlagabschnitt können insbesondere an entgegengesetzten Enden der Erstreckung des Sperrelement um die Gelenkachse herum angeordnet sein. Der Basisabschnitt muss sich dabei nicht um volle 360° um die Gelenkachse herum erstrecken, sondern kann sich auch lediglich entlang eines Teils einer die Gelenkachse umlaufenden Bahn, beispielsweise entlang eines Kreisbogens, erstrecken. Dadurch kann der Basisabschnitt insbesondere eine U-Form oder C-Form aufweisen. Eine C-Form, deren Öffnung zumindest geringfügig kleiner als der Durchmesser der die jeweilige Gelenkverbindung bildenden Struktur ist, kann insofern vorteilhaft sein, als ein solcher Basisabschnitt in zu der Gelenkachse radialer Richtung an die Gelenkachse angeklipst werden kann, dabei also an der Gelenkachse einrastet. Auf diese Weise kann sich das Sperrelement besonders einfach befestigen lassen.

Gemäß einer weiteren vorteilhaften Ausführungsform umfasst die Schwenkwinkelbegrenzung zwei Sperrelemente der genannten Art (an denen also jeweils zumindest ein erster Anschlagabschnitt und zumindest ein zweiter Anschlagabschnitt ausgebildet sind und die jeweils einen Basisabschnitt aufweisen können, der sich um die jeweilige Gelenkverbindung herum erstreckt und von dem die beiden Anschlagabschnitte parallel zur Gelenkachse der Gelenkverbindung vorstehen) sowie ein Fixierelement, das sich um die Gelenkachse der Gelenkverbindung, an der die Schwenkwinkelbegrenzung vorgesehen ist, herum erstreckt und bezüglich der Normalrichtung zwischen den zwei Sperrelementen angeordnet ist, so dass es die Sperrelemente an der Gelenkverbindung fixiert.

Die Schwenkwinkelbegrenzung kann also ein Sperrelement umfassen, an dem ein erster Anschlagabschnitt und ein zweiter Anschlagabschnitt ausgebildet sind, sowie ein weiteres Sperrelement umfassen, an dem ein weiterer erster Anschlagabschnitt und ein weiterer zweiter Anschlagabschnitt ausgebildet sind. Vorzugsweise weisen die beiden Sperrelemente zumindest im Wesentlichen dieselbe Erstreckung um die jeweilige Gelenkachse herum auf. Insbesondere können die beiden Sperrelemente baugleich zueinander ausgebildet sein. Ferner kann vorgesehen sein, dass die beiden Sperrelemente, insbesondere wenn die beiden über die jeweilige Gelenkverbindung miteinander gekoppelten Glieder ihre Maximalschwenkstellung einnehmen, deckungsgleich angeordnet sind, so dass sie sich entlang desselben Winkelbereichs um die jeweilige Gelenkachse herum erstrecken.

Die beiden Anschlagabschnitte des einen Sperrelements einerseits und die beiden Anschlagabschnitte des anderen Sperrelements andererseits stehen vorzugsweise in zueinander entgegengesetzte Richtungen von dem genannten Basisabschnitt des jeweiligen Sperrelements vor. Insbesondere kann vorgesehen sein, dass die Anschlagabschnitte dabei voneinander weg weisen. Beispielsweise können die zwei Sperrelemente bezüglich einer zur Normalrichtung senkrechten Ebene spiegelsymmetrisch zueinander angeordnet sein.

Wie der Basisabschnitt eines jeweiligen Sperrelements braucht sich auch das Fixierelement nicht um volle 360° um die Gelenkachse herum zu erstrecken, sondern kann sich auch lediglich entlang eines Teils einer die Gelenkachse umlaufenden Bahn, beispielsweise entlang eines Kreisbogens, erstrecken. Dadurch kann das Fixierelement insbesondere eine U-Form oder C-Form aufweisen. Eine C-Form, deren Öffnung zumindest geringfügig kleiner als der Durchmesser der die jeweilige Gelenkverbindung bildenden Struktur ist, kann insofern vorteilhaft sein, als ein solches Fixierelement in zu der Gelenkachse radialer Richtung an die Gelenkachse angeklipst werden kann, dabei also an der Gelenkachse einrastet. Auf diese Weise kann sich das Fixierelement besonders einfach befestigen lassen.

Eine Ausbildung der Schwenkwinkelbegrenzung mit zwei Sperrelementen und einem zwischen den Sperrelementen an der jeweiligen Gelenkverbindung angeordneten Fixierelement kann insbesondere zweckmäßig sein, wenn die Anordnung aufeinanderfolgender Glieder nach Art einer Bolzenkette oder Rollenkette ausgebildet ist und die Glieder der Anordnung jeweils zwei senkrecht zur Normalrichtung ausgerichtete und entlang der Normalrichtung versetzt zueinander angeordnete Gliederplatten umfassen. Denn dann können die zwei Sperrelemente an der jeweiligen Gelenkverbindung zwischen den zwei Gliederplatten sowohl des einen als auch des anderen der beiden über die jeweilige Gelenkverbindung miteinander gekoppelten Glieder angeordnet werden, wobei das zwischen den beiden Sperrelementen angeordnete Fixierelement die beiden Sperrelemente bezüglich der Gelenkachse der jeweiligen Gelenkverbindung in einem definierten (Minimal-)Abstand voneinander hält. Dadurch kann jedes der beiden Sperrelemente in einer Position gehalten werden, in welcher der an dem jeweiligen Sperrelement ausgebildete erste Anschlagabschnitt eine der beiden Gliederplatten des einen Gliedes und der an dem jeweiligen Sperrelement ausgebildete zweite Anschlagabschnitt die entsprechende (an derselben Seite der Anordnung vorgesehene) Gliederplatte des anderen Gliedes hintergreift, wobei durch dieses Hintergreifen gleichzeitig sowohl das jeweilige Sperrelement gegen ein Lösen von der jeweiligen Gelenkverbindung gesichert ist als auch die Schwenkbarkeit der beiden Glieder relativ zueinander begrenzt wird.

Zusätzlich oder alternativ zu der Ausbildung als Schwenkwinkelbegrenzung kann die Vorgabevorrichtung gemäß einer weiteren vorteilhaften Ausführungsform als Vorspannvorrichtung ausgebildet sein, welche die beiden über die jeweilige Gelenkverbindung miteinander gekoppelten Glieder relativ zueinander in Richtung zur Minimalschwenkstellung vorspannt. Vorzugsweise spannt die Vorspannvorrichtung die beiden Glieder bis in ihre Minimalschwenkstellung relativ zueinander vor. Das ist aber nicht unbedingt erforderlich. Es kann beispielsweise ausreichen, wenn die Glieder in Richtung zur Minimalschwenkstellung hin bis in eine Stellung vorgespannt werden, in der sie bereits so weit aufeinander zu verschwenkt sind, dass sie beim weiteren Zusammenlegen der Anordnung, insbesondere durch Aufeinander-zu-Bewegen ihrer Enden, im Wesentlichen zwangsläufig noch weiter bis in die Minimalschwenkstellung verschwenkt werden.

Auf diese Weise stellt die Vorspannvorrichtung alternativ oder ergänzend zu der Schwenkwinkelbegrenzung eine weitere Möglichkeit dar, den Gliedern der Anordnung für ein besonders einfaches Zusammenlegen der Anordnung eine jeweilige Schwenkrichtung vorzugeben.

Gemäß einer vorteilhaften Weiterbildung einer solchen Ausführungsform umfasst die Vorspannvorrichtung eine Schenkelfeder mit zwei Schenkeln, von denen der eine Schenkel dem einen der beiden über die jeweilige Gelenkverbindung (damit ist diejenige Gelenkverbindung gemeint, an der die jeweilige Vorgabevorrichtung vorgesehen ist) miteinander gekoppelten Glieder und der andere Schenkel mit dem anderen der beiden über die jeweilige Gelenkverbindung miteinander gekoppelten Glieder verbunden ist. Dies ist für die Vorspannvorrichtung zumindest einer, vorzugsweise für die Vorspannvorrichtungen jeder, der an einer jeweiligen Gelenkverbindung der Kette vorgesehenen Vorgabevorrichtungen der Fall.

Eine Schenkelfeder stellt eine vergleichsweise einfache Möglichkeit dar, die beiden an der jeweiligen Gelenkverbindung miteinander gekoppelten Glieder in eine bestimmte jeweilige Schwenkrichtung vorzuspannen. Grundsätzlich kommen aber auch andere Federn, die sich an einer jeweiligen Gelenkverbindung anordnen lassen, als Vorspannvorrichtung in Betracht.

Das erfindungsgemäße Kettenschloss ist insbesondere für ein Zweirad und insofern insbesondere als Zweiradkettenschloss ausgebildet und weist einen Schlosskörper sowie eine erfindungsgemäße Kette auf, die an dem Schlosskörper verriegelbar ist. Das heißt, dass der Schlosskörper dazu ausgebildet ist, dass die Kette, insbesondere zumindest eines von zwei Enden der Kette, mit dem Schlosskörper verbunden werden kann, wobei, insbesondere an dem Schlosskörper, ein Verriegelungsmechanismus vorgesehen ist, der dazu ausgebildet ist, diese Verbindung gegen ein Lösen zu sichern. Mit anderen Worten kann vorgesehen sein, dass der Schlosskörper eine Verriegelungsaufnahme aufweist, die dazu ausgebildet ist, einen Abschnitt der Kette aufzunehmen, und außerdem einen Verriegelungsmechanismus umfasst, mittels dessen der genannte Abschnitt der Kette gegen ein Verlassen der Verriegelungsaufnahme sicherbar ist.

Beispielsweise kann die Kette für die Verbindung mit dem Schlosskörper an ihrem einen Ende einen Kloben aufweisen. An dem Schlosskörper kann dann als die genannte Verriegelungsaufnahme eine Klobenaufnahme vorgesehen sein, in die der Kloben, insbesondere einrastend, aufgenommen werden kann und in welcher der darin aufgenommene Kloben mittels des Verriegelungsmechanismus gegen ein Verlassen der Klobenaufnahme gesichert werden kann. In einem solchen Fall bildet der Kloben also den (bzw. einen) in der Verriegelungsaufnahme aufnehmbaren und mittels des Verriegelungsmechanismus gegen ein Verlassen der Verriegelungsaufnahme sicherbaren Abschnitt der Kette.

Da das erfindungsgemäße Kettenschloss eine in erfindungsgemäßer Weise ausgebildete Kette umfasst, ergeben sich die Vorteile einer solchen Kette, insbesondere die einfache Zusammenlegbarkeit in die kompakte Aufbewahrungskonfiguration, die durch das Vorsehen der Vorgabevorrichtungen erreicht wird, in entsprechender Weise auch für das Kettenschloss.

Die Erfindung wird nachfolgend lediglich beispielhaft unter Bezugnahme auf die Figuren weiter erläutert.
- Fig. 1: zeigt eine Ausführungsform eines erfindungsgemäßen Kettenschlosses in einer kompakten Aufbewahrungskonfiguration.
- Fig. 2: zeigt einen Teil einer erfindungsgemäßen Kette bzw. der Kette eines erfindungsgemäßen Kettenschlosses in einer Stellung, in der aufeinanderfolgende Glieder der Kette relativ zueinander eine Maximalschwenkstellung einnehmen.
- Fig. 3: zeigt denselben Teil der auch in Fig. 2 gezeigten Kette in einer kompakten Aufbewahrungskonfiguration, in der aufeinanderfolgende Glieder der Kette relativ zueinander eine Minimalschwenkstellung einnehmen.
- Fig. 4: zeigt zwei Glieder einer weiteren Ausführungsform einer erfindungsgemäßen Kette bzw. der Kette eines erfindungsgemäßen Kettenschlosses.

Um zu vermeiden, dass die Darstellungen unübersichtlich werden, sind nicht in allen Figuren jeweils sämtliche dargestellten Elemente mit Bezugszeichen versehen, sondern sind von Elementen, die in mehreren Figuren gezeigt sind bzw. in einer Figur mehrfach gezeigt sind, nur einige mit Bezugszeichen gekennzeichnet. Die Bezugszeichen beziehen sich aber jeweils gleichermaßen auch auf die weiteren gleichartigen Elemente.

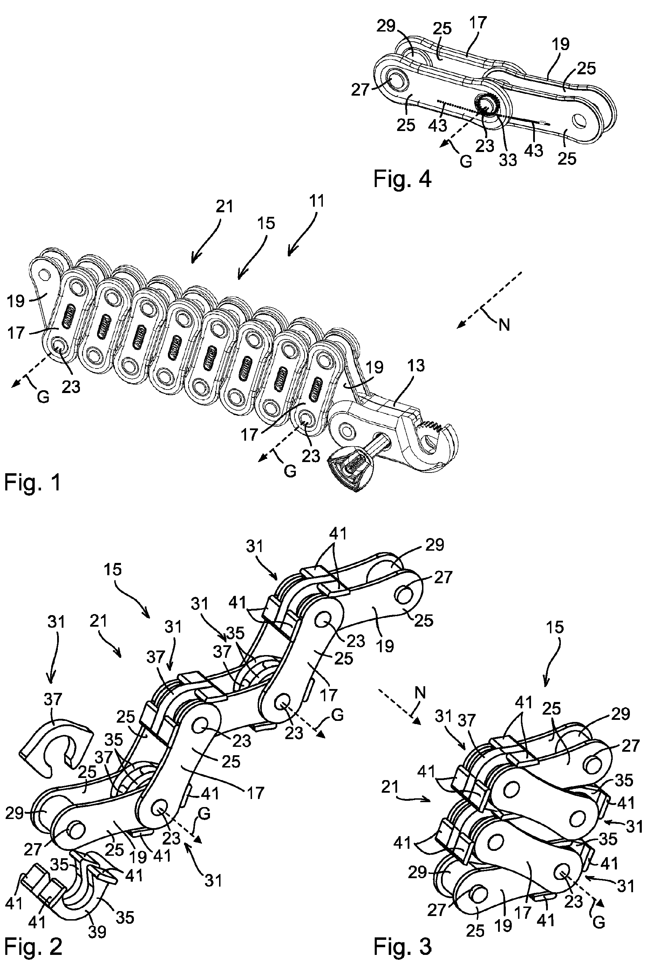

In Fig. 1 ist eine beispielhafte Ausführungsform eines erfindungsgemäßen Kettenschlosses 11 gezeigt, das insbesondere als Kettenschloss für ein Zweirad geeignet ist. Das Kettenschloss 11 umfasst einen Schlosskörper 13 sowie eine Kette 15, die eine Vielzahl abwechselnd aufeinanderfolgender erster und zweiter Glieder 17, 19 umfasst. Die ersten Glieder 17 sind untereinander zumindest im Wesentlichen baugleich ausgebildet, und die zweiten Glieder 19 sind ebenfalls untereinander zumindest im Wesentlichen baugleich ausgebildet. In den Fig. 2 und 3 sowie in Fig. 4 sind zwei weitere Beispiele für eine erfindungsgemäße Kette 15 bzw. die Kette 15 eines erfindungsgemäßen Kettenschlosses 11 gezeigt, bei denen die Kette 15 auf grundsätzlich entsprechende Weise ausgebildet ist, wobei dort jeweils nur ein wenige Glieder 17, 19 umfassender Teil der jeweiligen Kette 15 dargestellt ist.

Bei allen gezeigten Ketten 15 bilden die abwechselnd aufeinanderfolgenden ersten und zweiten Glieder 17, 19 jeweils eine serielle Anordnung 21, welche ihrerseits zumindest einen Teil der jeweiligen Kette 15 bildet. In den Figuren ist aufgrund des beschränkten Darstellungsplatzes jeweils nur ein Teil der Anordnung 21 gezeigt, der beispielsweise in Fig. 1 neun erste Glieder 17 und acht zweite Glieder 19 umfasst. Um eine hinreichende Länge zur Verwendung als Kettenschloss für Zweiräder aufzuweisen, weisen die Ketten 15 eigentlich wesentlich mehr Glieder 17, 19 auf. Dazu setzt sich die jeweilige serielle Anordnung 21 der abwechselnd aufeinanderfolgenden ersten und zweiten Glieder 17, 19 an dem losen Ende (links) des in Fig. 1 gezeigten Teils der Anordnung 21 bzw. an den beiden losen Enden (links und rechts) des jeweiligen in den Fig. 2 bis 4 gezeigten Teils der Anordnung 21 in entsprechender Weise fort.

Durch das abwechselnde Aufeinanderfolgen erster Glieder 17 und zweiter Glieder 19 bilden jeweils ein erstes Glied 17 und ein zweites Glied 19 eine Einheit, die sich entlang der seriellen Anordnung 21 wiederholt. In Fig. 4 ist eine solche Einheit separat gezeigt. Wie insbesondere dort zu erkennen ist, erstreckt sich jedes der Glieder 17, 19 von einem ersten Ende, an dem es mit dem jeweiligen ihm entlang der seriellen Anordnung 21 vorangehenden Glied 17 bzw. 19 der Anordnung 21 gekoppelt ist, zu einem dazu entgegengesetzten zweiten Ende, an dem es mit dem jeweiligen ihm entlang der seriellen Anordnung 21 nachfolgenden Glied 17 bzw. 19 der Anordnung 21 gekoppelt ist. Die Längserstreckung der Glieder 17, 19 von dem ersten Ende bis zu dem zweiten Ende beträgt beispielsweise etwa 5 cm.

Jedes der Glieder 17, 19 ist mit dem jeweiligen ihm entlang der seriellen Anordnung 21 vorangehenden Glied 17, 19 und dem jeweiligen ihm entlang der seriellen Anordnung 21 nachfolgenden Glied 17, 19 über eine jeweilige Gelenkverbindung 23 gekoppelt (mit Ausnahme zweier Endglieder der Anordnung 21, die jeweils nur mit dem jeweiligen nachfolgenden Glied 17, 19 bzw. nur mit dem jeweiligen vorangehenden Glied 17, 19 gekoppelt sind) . Die Kopplung ist derart, dass die beiden über die jeweilige Gelenkverbindung 23 miteinander gekoppelten Glieder 17, 19 um eine Gelenkachse G der Gelenkverbindung 23 relativ zueinander schwenkbar sind, wobei die Gelenkachsen G aller Gelenkverbindungen 23 zumindest im Wesentlichen parallel zu derselben Normalrichtung N ausgerichtet sind.

Sowohl die ersten Glieder 17 als auch die zweiten Glieder 19 umfassen jeweils zwei Gliederplatten 25, die entlang der Normalrichtung N versetzt zueinander angeordnet sind und sich mit zumindest im Wesentlichen konstantem Abstand zueinander von dem ersten Ende zu dem zweiten Ende des jeweiligen Gliedes 17, 19 erstrecken. Der Abstand der Gliederplatten 25 eines jeweiligen ersten Gliedes 17 der seriellen Anordnung 21 ist dabei größer als der Abstand der Gliederplatten 25 eines jeweiligen zweiten Gliedes 19 der seriellen Anordnung 21. Insbesondere entspricht der Innenabstand der Gliederplatten 25 bei den ersten Gliedern 17 zumindest im Wesentlichen dem Außenabstand der Gliederplatten 25 bei den zweiten Gliedern 19, so dass zwei aufeinanderfolgende Glieder 17, 19 der Anordnung 21 zur Kopplung miteinander überlappen können. Dabei ist dann eines der Enden des jeweiligen zweiten Gliedes 19 im Bereich eines der Enden des jeweiligen ersten Gliedes 17 zwischen den Gliederplatten 25 dieses ersten Gliedes 17 angeordnet.

Die Gelenkverbindungen 23 werden jeweils durch einen Bolzen 27 gebildet, der die Gliederplatten 25 der beiden jeweiligen durch die jeweilige Gelenkverbindung 23 gekoppelten Glieder 17, 19 an deren jeweiligem Ende durchgreift. Zur Befestigung kann insbesondere vorgesehen sein, dass der Bolzen 27 an den beiden Enden seiner Längserstreckung jeweils eine Umfangsverbreiterung aufweist, so dass er mit den beiden äußersten Gliederplatten 25 (also mit den Gliederplatten 25 des an der jeweiligen Gelenkverbindung 23 beteiligten ersten Gliedes 17) eine Art Nietverbindung eingeht.

Damit das an der jeweiligen Gelenkverbindung 23 beteiligte zweite Glied 19 zuverlässig gelenkig an dem Bolzen 27 gelagert ist, kann die jeweilige Gelenkverbindung 23 zudem eine Hülse 29 umfassen, die zwischen den beiden innersten Gliederplatten 25 (also zwischen den Gliederplatten 25 des an der jeweiligen Gelenkverbindung 23 beteiligten zweiten Gliedes 19) angeordnet ist und durch die hindurch sich der Bolzen 27 erstreckt. Die Hülse 29 kann dabei lose oder mit den beiden innersten Gliederplatten 25 fest verbunden sein. Eine solche Hülse 29 kann als Abstandshalter fungieren, um die beiden Gliederplatten 25 in einem definierten Abstand zueinander zu halten. In den Figuren sind die Hülsen 29 vor allem in den Fig. 2 bis 4 (an den Enden des gezeigten jeweiligen Teils der Kette 15) zu erkennen.

Die Kette 15 weist in den verschiedenen gezeigten Ausführungsformen jeweils Vorgabevorrichtungen 31, 33 auf, die bei der in Fig. 1 gezeigten Kette 15 jedoch nicht dargestellt sind. Bei den gezeigten Ausführungsformen ist an jeder Gelenkverbindung 23 der jeweiligen Kette 15 eine Vorgabevorrichtung 31, 33 vorgesehen. Jede der Vorgabevorrichtungen 31, 33 ist dazu ausgebildet, den beiden über die jeweilige Gelenkverbindung 23, an der sie vorgesehen ist, miteinander gekoppelten Gliedern 17, 19 eine Schwenkrichtung vorzugeben, in welche sie beim Zusammenlegen der Anordnung 21 relativ zu einander verschwenkt werden, so dass die Anordnung letztlich ihrer kompakte Aufbewahrungskonfiguration einnimmt (vgl. Fig. 1 und 3).

Bei der in den Fig. 2 und 3 gezeigten Ausführungsform sind die Vorgabevorrichtungen jeweils in Form einer Schwenkwinkelbegrenzung 31 ausgebildet, die von den Gliedern 17, 19 der Anordnung 21 separat ausgebildet ist.

Wie insbesondere in Fig. 2 zu erkennen ist, in der eine der Schwenkwinkelbegrenzungen 31 von der jeweiligen Gelenkverbindung 23 gelöst dargestellt ist, umfasst die Schwenkwinkelbegrenzung 31 zwei Sperrelemente 35, die zueinander baugleich ausgebildet sind, sowie ein Fixierelement 37. Die Sperrelemente 35 weisen jeweils einen Basisabschnitt 39 auf, der sich um die Gelenkachse G der Gelenkverbindung 23, an der die jeweilige Schwenkwinkelbegrenzung 31 vorgesehen ist, so weit herum erstreckt, dass er eine U-Form aufweist. An beiden Enden seiner Erstreckung um die Gelenkachse G herum steht von dem Basisabschnitt 39 jeweils ein Anschlagabschnitt 41 parallel zur Gelenkachse G vor, wobei beide an einem jeweiligen der Sperrelemente 35 ausgebildeten Anschlagabschnitte 41 in dieselbe zur Gelenkachse G parallele Richtung vorstehen.

Das Fixierelement 37 erstreckt sich ähnlich dem Basisabschnitt 39 eines Sperrelements 35 um die Gelenkachse G der jeweiligen Gelenkverbindung 23 herum. Dabei erstreckt sich das Fixelement 37 weiter um die Gelenkachse G herum als die Basisabschnitte 39 der Sperrelemente 35, so dass das Fixierelement 37 eine C-Form aufweist.

Zur Befestigung der Schwenkwinkelbegrenzung 31 werden die beiden Sperrelemente 35 derart an der jeweiligen Gelenkverbindung 23 angeordnet, dass die Gelenkverbindung 23 im Innenbereich der U-Form der Basisabschnitte 39 der Sperrelemente 35 aufgenommen ist. Die Sperrelemente 35 sind dabei bezüglich einer zur Normalrichtung N senkrechten Ebene spiegelsymmetrisch zueinander angeordnet, so dass die an dem einen Sperrelement 35 ausgebildeten Anschlagabschnitte 41 und die an dem anderen Sperrelement 35 ausgebildeten Anschlagabschnitte 41 voneinander weg weisen. Die Erstreckung der Anschlagabschnitte 41 entlang der Gelenkachse G ist dabei derart, dass wenn die beiden Sperrelemente 35 aneinander anliegen, die in entgegengesetzte Richtungen weisenden Anschlagabschnitte 41 zwischen den Gliederplatten 25 beider über die jeweilige Gelenkverbindung 23 miteinander gekoppelten Glieder 17, 19 hindurch geführt werden können.

Anschließend können die beiden Sperrelemente 35 entlang der Gelenkachse G auseinander bewegt werden, so dass die Anschlagabschnitte 41 jeweils eine der Gliederplatten 25 eines der beiden über die jeweilige Gelenkverbindung 23 miteinander gekoppelten Glieder 17, 19 bezüglich einer jeweiligen Schwenkrichtung hintergreifen. In den Freiraum zwischen den Sperrelementen 35 kann dann das Fixierelement 37 eingesetzt werden, um die Sperrelemente 35 auf diese Weise voneinander beabstandet zu halten. Aufgrund der C-Form des Fixierelements 37 rastet dieses dabei um die jeweilige Gelenkverbindung 23 ein, so dass die Schwenkwinkelbegrenzung 31 insgesamt zuverlässig an der jeweiligen Gelenkverbindung 23 befestigt ist.

Durch die Sperrelemente 35, insbesondere durch deren Anschlagabschnitte 41, wird die Schwenkbarkeit der beiden über die jeweilige Gelenkverbindung 23, an der die Sperrelemente 35 vorgesehen sind, miteinander gekoppelten Glieder 17, 19 relativ zueinander begrenzt, nämlich darauf, aus einer Minimalschwenkstellung, die sie in der in Fig. 3 gezeigten kompakten Aufbewahrungskonfiguration einnehmen und in der sie einen im Rahmen ihrer relativen Schwenkbarkeit kleinstmöglichen Winkel einschließen, bis in eine Maximalschwenkstellung verschwenkt zu werden, die sie in dem in Fig. 2 gezeigten Zustand einnehmen und in der sie einen im Rahmen ihrer relativen Schwenkbarkeit größtmöglichen Winkel einschließen. Die Anschlagabschnitte 41 sind dabei derart angeordnet, dass dieser größtmögliche Winkel kleiner als 180° ist.

Zudem sind die Schwenkwinkelbegrenzungen 31 abwechselnd aus entgegengesetzten Richtungen an den Gelenkverbindungen 23 der Anordnung 21 befestigt, so dass zum Erreichen der Minimalschwenkstellung alle ersten Glieder 17 relativ zu dem jeweiligen ihm vorangehenden zweiten Glied 19 in eine erste Schwenkrichtung und alle zweiten Glieder 19 relativ zu dem jeweiligen ihm vorangehenden ersten Glied 17 in eine zu der ersten Schwenkrichtung entgegengesetzte zweite Schwenkrichtung verschwenkt werden. Das hat zur Folge, dass die Anordnung 21 eine Zickzackform aufweist. Außerdem kann dadurch die Anordnung 21 der Kette 15 nicht stärker ausgestreckt sein, als es in Fig. 2 für ein Teil der Kette 15 gezeigt ist.

Das führt vorteilhafterweise dazu, dass die Glieder 17, 19 der Anordnung 21 der Kette 15, wenn die Enden der Anordnung 21 (insbesondere aus einer maximal ausgestreckten Konfiguration) für ein Zusammenlegen der Anordnung 21 aufeinander zu bewegt werden, relativ zu dem jeweiligen vorangehenden bzw. nachfolgenden Glied 17, 19 aus der Maximalschwenkstellung nur in Richtung der Minimalschwenkstellung verschwenkt werden können, so dass die Anordnung 21 im Wesentlichen zwangsläufig letztlich ihre kompakte Aufbewahrungskonfiguration einnimmt. Auf diese Weise wird das Zusammenlegen unterstützt und somit vereinfacht.

Bei der in Fig. 4 gezeigten Ausführungsform sind die Vorgabevorrichtungen jeweils in Form einer Vorspannvorrichtung 33 ausgebildet, die wie die Schwenkwinkelbegrenzungen 31 von den Gliedern 17, 19 der Anordnung 21 separat ausgebildet ist. Die Vorspannvorrichtung 33 ist dabei als eine Schenkelfeder ausgebildet, die an der jeweiligen Gelenkverbindung 23, an der sie vorgesehen ist, befestigt ist. Dabei erstreckt sich die jeweilige Gelenkverbindung 23 durch die Windungen der Schenkelfeder. Von den beiden Schenkeln 43 der Schenkelfeder ist der eine mit dem einen der beiden über die jeweilige Gelenkverbindung 23 miteinander gekoppelten Glieder 17, 19, nämlich mit dem in Fig. 4 rechten Glied 19, verbunden und der andere mit dem anderen der beiden über die jeweilige Gelenkverbindung 23 aneinander gekoppelten Glieder 17, 19, nämlich mit dem in Fig. 4 linken Glied 17, verbunden. In Fig. 4 ist die Vorspannvorrichtung 33 dabei zum Teil von der vorderen Gliederplatte 25 des linken Gliedes 17 verdeckt, weshalb dieser Teil mit unterbrochener Linie dargestellt ist.

Durch die Kopplung der Vorspannvorrichtung 33 mit den beiden jeweiligen Gliedern 17, 19 übt die Vorspannvorrichtung 33 eine Vorspannung auf diese Glieder 17, 19 aus, welche die Glieder 17, 19 in eine jeweilige Schwenkrichtung vorspannt. Die Vorspannvorrichtungen 33 sind dabei derart an den Gelenkverbindung 23 angeordnet, dass entlang der Abfolge der Gelenkverbindungen 23 der Anordnung 21 die beiden über eine jeweilige der Gelenkverbindungen 23 miteinander gekoppelten Glieder 17, 19 abwechselnd in eine erste Schwenkrichtung und in eine zweite Schwenkrichtung vorgespannt werden. Sofern die Anordnung 21 nicht von einer den Vorspannungen entgegenwirkenden Kraft in einem anderen Zustand gehalten wird, weist die Anordnung 21 daher eine Zickzackform auf. Vorzugsweise wird die Anordnung 21 durch die von den Vorspannvorrichtungen 33 ausgeübte Vorspannung bis in die kompakte Aufbewahrungskonfiguration vorgespannt.

Durch das Vorsehen der Vorgabevorrichtungen 31, 33 wird erreicht, dass auch eine Kette 15 mit einer großen Anzahl vergleichsweise kurzer Kettenglieder 17, 19 schnell und komfortabel in einer definierten Weise zusammengelegt werden kann, nämlich in eine kompakte Aufbewahrungskonfiguration, in der sie dann einfach verstaut und gut mitgeführt werden kann.

### Bezugszeichen

- 11: Kettenschloss
- 13: Schlosskörper
- 15: Kette
- 17: erstes Glied
- 19: zweites Glied
- 21: serielle Anordnung
- 23: Gelenkverbindung
- 25: Gliederplatte
- 27: Bolzen
- 29: Hülse
- 31: Vorgabevorrichtung, nämlich Schwenkwinkelbegrenzung
- 33: Vorgabevorrichtung, nämlich Vorspannvorrichtung
- 35: Sperrelement
- 37: Fixierelement
- 39: Basisabschnitt
- 41: Anschlagabschnitt
- 43: Schenkel
- G: Gelenkachse
- N: Normalrichtung

## Patentansprüche

1. Kette (15) für ein Kettenschloss (11), das insbesondere als Kettenschloss (11) für ein Zweirad ausgebildet sein kann,
wobei die Kette (15) eine serielle Anordnung (21) aufeinanderfolgender Glieder (17, 19) umfasst, die untereinander über eine jeweilige Gelenkverbindung (23) miteinander gekoppelt und um eine zu einer Normalrichtung (N) parallele Gelenkachse (G) der jeweiligen Gelenkverbindung (23) relativ zueinander schwenkbar sind,
wobei die Anordnung (21) in eine kompakte Aufbewahrungskonfiguration zusammenlegbar ist, in welcher an jeder der Gelenkverbindungen (23) die beiden über die jeweilige Gelenkverbindung (23) miteinander gekoppelten Glieder (17, 19) relativ zueinander eine Minimalschwenkstellung einnehmen, in der sie einen im Rahmen ihrer relativen Schwenkbarkeit kleinstmöglichen Winkel einschließen,
wobei an zumindest einigen, vorzugsweise an jeder, der Gelenkverbindungen (23) eine Vorgabevorrichtung (31, 33), insbesondere in Form einer Schwenkwinkelbegrenzung (31) und/oder einer Vorspannvorrichtung (33), vorgesehen ist, welche den beiden über die jeweilige Gelenkverbindung (23) miteinander gekoppelten Gliedern (17, 19) eine Schwenkrichtung vorgibt, in welche sie beim Zusammenlegen der Anordnung (21) relativ zueinander verschwenkt werden.

2. Kette nach Anspruch 1,
wobei die Vorgabevorrichtungen (31, 33) den beiden über die jeweilige Gelenkverbindung (23) miteinander gekoppelten Gliedern (17, 19) entlang der Anordnung (21) abwechselnd eine erste Schwenkrichtung bzw. eine dazu entgegengesetzte zweite Schwenkrichtung vorgeben, in welche die beiden Glieder (17, 19) beim Zusammenlegen der Anordnung (21) relativ zueinander verschwenkt werden.

3. Kette nach Anspruch 1 oder 2,
wobei die Vorgabevorrichtung als Schwenkwinkelbegrenzung (31) ausgebildet ist, welche die Schwenkbarkeit der beiden über die jeweilige Gelenkverbindung (23) miteinander gekoppelten Glieder (17, 19) relativ zueinander darauf begrenzt, aus der Minimalschwenkstellung bis in eine Maximalschwenkstellung verschwenkt zu werden, in der sie einen im Rahmen ihrer relativen Schwenkbarkeit größtmöglichen Winkel einschließen, wobei dieser größtmögliche Winkel kleiner als 180° ist.

4. Kette nach Anspruch 3,
wobei die Schwenkwinkelbegrenzung (31) zumindest einen Anschlagabschnitt (41) umfasst, der an einem der beiden über die jeweilige Gelenkverbindung (23) miteinander gekoppelten Glieder (17, 19) ausgebildet ist und an dem das jeweils andere der beiden Glieder (17, 19) anschlägt, wenn die beiden Glieder (17, 19) relativ zueinander in die Maximalschwenkstellung verschwenkt werden.

5. Kette nach Anspruch 3,
wobei die Schwenkwinkelbegrenzung (31) von den Gliedern (17, 19), deren Schwenkbarkeit sie begrenzt, separat ausgebildet ist.

6. Kette nach Anspruch 5,
wobei die Schwenkwinkelbegrenzung (31) zumindest einen ersten Anschlagabschnitt (41) und zumindest einen zweiten Anschlagabschnitt (41) aufweist und derart an der jeweiligen Gelenkverbindung (23) angeordnet ist, dass das eine der beiden über die jeweilige Gelenkverbindung (23) miteinander gekoppelten Glieder (17, 19) an dem ersten Anschlagabschnitt (41) anschlägt und das andere der beiden über die jeweilige Gelenkverbindung (23) miteinander gekoppelten Glieder (17, 19) an dem zweiten Anschlagabschnitt (41) anschlägt, wenn die beiden Glieder (17, 19) relativ zueinander in die Maximalschwenkstellung verschwenkt werden.

7. Kette nach Anspruch 5 oder 6,
wobei die Schwenkwinkelbegrenzung (31) zumindest ein Sperrelement (35) umfasst, an dem der zumindest eine erste Anschlagabschnitt (41) und der zumindest eine zweite Anschlagabschnitt (41) ausgebildet sind.

8. Kette nach Anspruch 7,
wobei das Sperrelement (35) einen Basisabschnitt (39) aufweist, der sich um die Gelenkachse (G) der Gelenkverbindung (23), an der die Schwenkwinkelbegrenzung (31) vorgesehen ist, herum erstreckt und von dem der erste Anschlagabschnitt (41) und der zweite Anschlagabschnitt (41) parallel zur Gelenkachse (G) vorstehen.

9. Kette nach Anspruch 7 oder 8,
wobei die Schwenkwinkelbegrenzung (31) zwei Sperrelemente (35) der genannten Art sowie ein Fixierelement (37) umfasst, das sich um die Gelenkachse (G) der Gelenkverbindung (23), an der die Schwenkwinkelbegrenzung (31) vorgesehen ist, herum erstreckt und bezüglich der Normalrichtung (N) zwischen den zwei Sperrelementen (35) angeordnet ist, so dass es die Sperrelemente (35) an der Gelenkverbindung (23) fixiert.

10. Kette nach einem der vorstehenden Ansprüche,
wobei die Vorgabevorrichtung als Vorspannvorrichtung (33) ausgebildet ist, welche die beiden über die jeweilige Gelenkverbindung (23) miteinander gekoppelten Glieder (17, 19) relativ zueinander in Richtung zur Minimalschwenkstellung vorspannt.

11. Kette nach Anspruch 10,
wobei die Vorspannvorrichtung (33) eine Schenkelfeder mit zwei Schenkeln (43) umfasst, von denen der eine Schekel (43) mit dem einen der beiden über die jeweilige Gelenkverbindung (23) miteinander gekoppelten Glieder (17, 19) und der andere Schenkel (43) mit dem anderen der beiden über die jeweilige Gelenkverbindung (23) miteinander gekoppelten Glieder (17, 19) verbunden ist.

12. Kettenschloss (11), insbesondere für ein Zweirad, mit einem Schlosskörper (13) sowie einer Kette (15), die nach einem der vorstehenden Ansprüche ausgebildet und, insbesondere mit einem an einem ihrer Enden ausgebildeten Kloben, an dem Schlosskörper (13) verriegelbar ist.
